# EUROPEAN PATENT SPECIFICATION

(11) **EP 0 543 804 B1**
(45) Date of publication and mention of the grant of the patent: **18.12.1996**
(21) Application number: 90910497.8
(22) Date of filing: 30.07.1990
(51) Int. Cl.: H04N 11/04

(54) **METHOD AND APPARATUS FOR IMAGE DATA PROCESSING**
VERFAHREN UND VORRICHTUNG ZUR BILDDATENVERARBEITUNG
PROCEDE ET APPAREIL DE TRAITEMENT DE DONNEES D'IMAGES

(43) Date of publication of application: 02.06.1993
(73) Proprietor: MPR TELTECH LTD., Burnaby, British Columbia V5A 4B5 (CA)
(72) Inventor: TRENT, Robert, John, Coquitlam, British Columbia V3K 5B5 (CA)
(74) Representative: Frei, Alexandra Sarah
(86) International application number: CA9000244
(87) International publication number: WO9203019

(56) References cited:
- EP-A- 0 084 270
- US-A- 4 772 956
- US-A- 4 774 587

## Description

### BACKGROUND

The present invention relates to a method and apparatus for processing image data for transmission along telephone lines and for decoding the processed data after transmission such that the data can be transformed to produce colour images of colour television quality.

Known systems for transmitting image data along telephone lines are severely limited in the speed at which the data can be transmitted and reassembled at a receiving end. For example, a single frame of a colour television quality image contains 512 by 512 by 24 bits and takes approximately 90 seconds to transmit without compression using a 64 kilobit per second standard ISDN B channel. One method to enhance transmission speed is to compress the data according to known transforms and then, after transmission, to decompress the compressed, transmitted data.

A television screen, for example, is divided up into a plurality of individual image units referred to as pixels. For colour images each pixel may contain three separate parameters such as red, green and blue. Each parameter may be defined as to intensity by an eight bit number called a byte. Thus, each pixel is defined by three bytes. In order to process the data efficiently it is useful to treat a block of 8 by 8 pixels known as a "tile". A known technique consists of directing a first tile of an image into a processor and then inputting the first tile into a digital transformer. The tile output modified by the transformer is sent back to the processor where it is further compressed and sent to an output port. The second tile in the image is then sent to the transformer. This process is repeated until all of the image tile have been processed. In such a system the requirement for numerous fetch and other instructions from the processor makes the process impractically slow. Thus, the advantage of transmission speed increase due to compression is offset by the time taken to compress and decompress.

U.S. Patent US-A-4,772,956 issued to Roche et al is directed to a video transceiver which digitizes and stores video data in a frame store memory. A microprocessor fetches a pair of blocks of data from the frame store memory and transfers them to a dual port memory and then fetches two more blocks of data from the frame store memory and transfers them to the dual port memory. While transfer of the second pair of blocks is taking place, a digital signal processor begins transforming the first pair of blocks of data. After the first pair of blocks is transformed it is transferred back to the dual port memory and then fetched by the processor and coded. When each block is transformed and coded and stored in the dual port memory it is then directed to a temporary buffer and then to the frame buffer. Use of a microprocessor to generate control signals and addresses for the system limits operational speed. Moreover, no compression can occur from the time four blocks of the compressed data are being stored back into the frame store memory to the time when transferral of the next two blocks of data from the frame store memory to the dual port memory has been completed.

Accordingly, it is an object of the invention to provide an improved method of processing imaging data for compression and decompression. It is a further object of the invention to provide a buffer to receive and store data corresponding to an image and then to process the captured data.

### SUMMARY OF THE INVENTION

According to the invention as claimed in claim 1 there is provided a method of processing digital image data such as obtained from a television screen for transmission along telephone lines in a way that the transmitted data can be transformed to produce images in colour. The method includes storing a frame of digital data in a frame buffer, transferring data from said frame buffer to a tile buffer, generating a clock signal, and generating sets of address and control signals in a state machine. The clock signal is applied to a digital transformer while the address and set of control signals are applied to the tile buffer to directly transfer data in the tile buffer to the digital transformer. After the data is transformed in the digital transformer, it is returned to the tile buffer where it is used to overwrite the corresponding original data stored in the tile buffer. The latter process is followed by coding the transformed data stored in the tile buffer using a digital signal processor, so as to compress them. Whilst data is transferred to the digital signal processor and coded, additional data is transferred from the frame buffer to the tile buffer. The process is repeated until all data in the frame buffer has been compressed.

Preferably, the data is transferred directly to the tile buffer. The clock signal may have a frequency of greater than approximately one megahertz. Advantageously, the digital transforming step applies a discrete cosine transform while the coding is Huffman coding.

An improvement in speed is achieved by utilizing Y, I and Q parameters to define a pixel colour. By alternating I and Q data in each alternate pixel, a saving of 1/3 of the data required to describe the image is achieved without a significant loss of resolution or colour.

The compressing step may include sequentially transferring data in the form of tiles into a tile buffer and performing a discrete cosine transform on each of the tiles wherein each tile is composed of a matrix of 8 by 8 pixels and each pixel being characterized as to colour and intensity. The transformed tiles are then coded in accordance with Huffman coding. The DCT and Huffmann coding are described in ISO/CCITT JPEG-8-R5.2 standard recently published.

The tile pixels in the frame buffer are extracted row by row tile by tile until an entire row of tiles has been transferred, commencing from the first row and proceeding in sequence row by row until the last row has been extracted.

The video signals, if in analog form, are first digitized before storing them in the frame buffer. After compressing the data it is transferred to a communication output interface.

The method may also include, as claimed in claim 9, reversing the order of processing to perform first inverse Huffman Coding on compressed data, followed by inverse Huffman Coding and then transferring the decompressed data to the frame buffer for further transfer to be transformed into analog video signals.

Further, an apparatus as defined in claim 15 is provided.

### BRIEF DESCRIPTION OF THE DRAWINGS

The novel features believed characteristic of the invention are set forth in the appended claims. The invention itself, however, as well as other features and advantages thereof, will be best understood by reference to the detailed description which follow, read in conjunction with the accompanying drawings, wherein:
Figure 1 is a block diagram of a conventional system for processing image data;
Figure 2 is a block diagram of a preferred apparatus for processing image data from analog video source such as a television monitor;
Figure 3(a) and 3(b) are schematic diagrams showing a portion of a row of pixels in a part of the frame buffer to demonstrate their composition for two different choices of parameters to describe colour and intensity;
Figure 4 is a timing diagram showing the movement of tiles into and out of the discrete cosine transform;
Figure 5 is a schematic block diagram showing the state machine and its output of address and control signals which govern the flow of data between the frame buffer, the tile buffer and the discrete cosine transform;
Figure 6 is a table showing the structure of the address bits generated by the state machine which are used to transfer data between the frame buffer, the tile buffer and the discrete cosine transform (DCT) ; and
Figure 7 is a block diagram showing a more detailed system corresponding to that shown in Figures 2 and 5 hereof.

### DETAILED DESCRIPTION WITH REFERENCE TO THE DRAWINGS

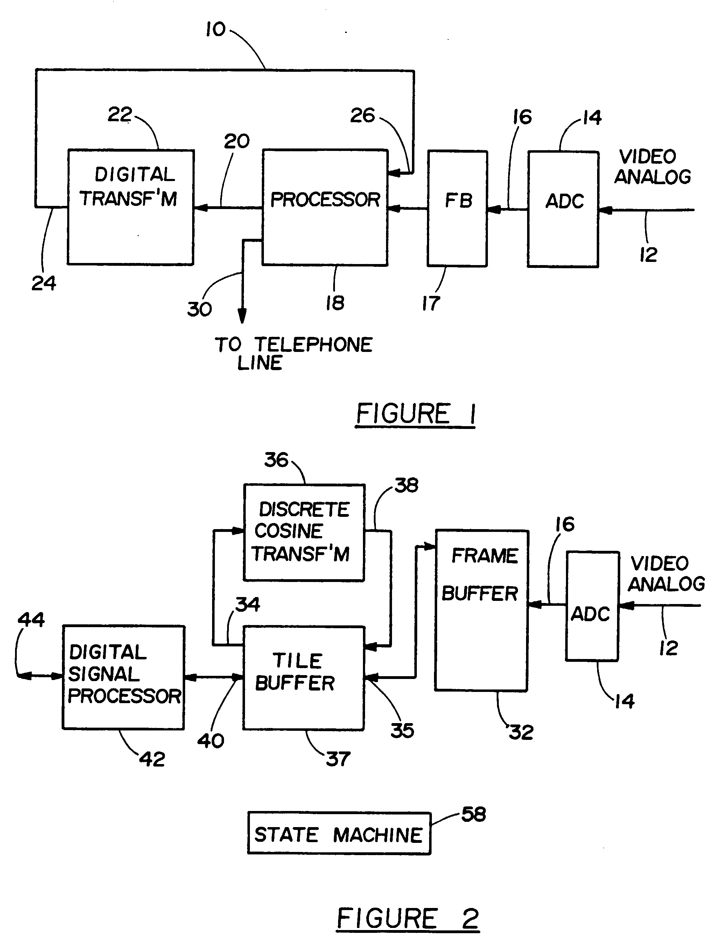

Referring to Figure 1 there is shown a conventional system for processing image data received from a video source in analog form on line 12. The signals on line 12 are converted to digital signals by analog to digital converter 14, outputted on line 16 to a frame buffer 17 and then to a processor 18. The processor transmits the data on line 20 to a digital transformer 22 which modifies the data and returns it back to the processor 18 where it is then sent along line 30 to a telephone line for transmission. The digital transformer 22, which performs a discrete cosine transform on tiles made up of a block of 8 pixels by 8 pixels, inputs and outputs its data in a predefined order. This required ordering of the data is determined by the internal structure of the digital transformer 22. The image data received by the processor 18 from the frame buffer 17 are sent to and received from the digital transformer 22 in tiles of 8 pixels by 8 pixels in the order expected by the digital transformer 22. Each tile of image data from the frame buffer 17 is directed through the digital transformer 22 and further processed by the processor 18 in order to compress the image. Although data is compressed by the transformer 22, the time for compression and subsequent decompression on a receiving end (not shown) would offset any advantage due to increased speed of transmission.

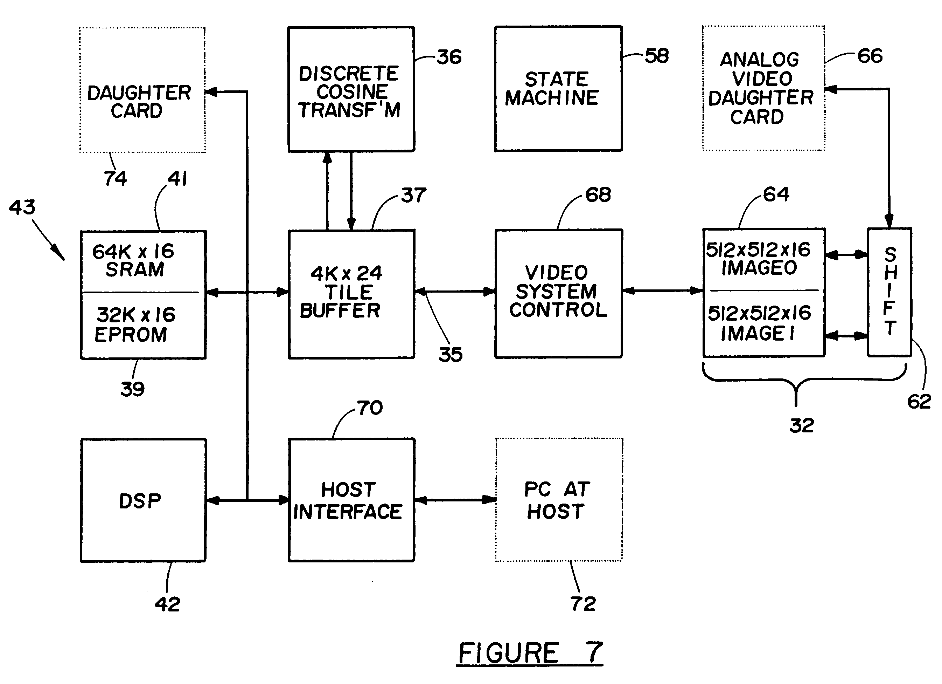

Referring to Figure 2 there is shown a system in accordance with a preferred embodiment of the invention in which analog signals on line 12 are converted to digital signals on line 16 by an analog-to-digital converter 14. The digitized image data from the analog to digital converter 14 is sent on line 16 to a frame buffer 32 in which the image data is temporarily stored or captured. The frame buffer 32 consists of 8 one megabit video dynamic random access memory chips (called "VRAMS") made by Texas Instruments Incorporated which form two image memory units each of 512 X 512 X 16 bits capacity. Data in the frame buffer 32 is stored in rows with each block of 8 pixel x 8 pixel forming a tile. A first row of tiles ("row 0") is moved into the tile buffer 37 from the frame buffer 32 along line 35 in response to control signals from a state machine 58. The memory 39 of the tile buffer 37 (see Figure 7) consists of enough high speed static random access memory (SRAM) chips 41 to contain one row of 8 pixel by 8 pixel tiles from the frame buffer 32. The state machine 58 moves the first two tiles in the tile buffer 37 into the digital transformer 36, which in this case is a discrete cosine transform chip manufactured by INMOS in the United Kingdom and sold under part number 1MSA121 (hereinafter referred to as a "DCT"), where they are processed and then transferred back to the tile buffer 37. The state machine 58 presents the individual pixels of each tile to the DCT chip 36 in the order required by the DCT chip 36. In addition, the state machine 58 overwrites each tile in the tile buffer 37 with the resulting DCT coefficients generated by the DCT chip 36. The DCT chip 36 takes 8 pixel x 8 pixel tiles, performs a discrete cosine transform, and then outputs the results.

Following the transformation of the first two tiles from the tile buffer 37 through the DCT chip 36, each remaining pair of tiles in the tile buffer 37 is directed through the DCT chip 36 by the state machine 58 until all of the tiles have been transformed and their resulting DCT coefficients are stored back in the tile buffer 37. The DCT coefficients in the tile buffer 37 are then accessed by a digital signal processor (DSP) 42 chip which commences a coefficient to symbol conversion, namely such as Huffman coding, on the data. Other types of conversion are possible. The DSP chip 42 is manufactured by Texas Instruments Incorporated under part number TMS320C25. The resulting compressed data from the DSP 42 is then sent to a communication card 74 and is ultimately sent over a telephone line or stored on a hard disk drive (not shown).

While the DSP chip 42 is performing coefficient to symbol conversion, the state machine 58 begins operation on the second row of tiles (row 1) in the frame buffer 32. It transfers this row of image data to the tile buffer 37 and, once again, runs this data through the DCT chip 36 and deposits the results back in the tile buffer 37 for the DSP 42 to eventually access. Row by row of tiles from the frame buffer 32 are transferred to the tile buffer 37, transformed by the DCT 36, and then directed to the DSP 42 for coefficient to symbol conversion until the entire image, comprised of all 64 rows of tiles, has been compressed. The data movement operations caused by the state machine 58 and the processing by the DSP 42 may occur concurrently so that discrete cosine transformations may occur in parallel with Huffman coding, further increasing the compression speed.

The circuit of Figure 2 can also receive compressed data on line 44 into the DSP 42 which applies a symbol to coefficient conversion known as reverse Huffman coding. Other types of conversion are also possible. Following operation by the DSP 42, the data is transferred to the tile buffer 37 from which it goes into the DCT 36. The DCT chip 36 is configured to apply an inverse transform and hence decompress the data. The decompressed data is written into the frame buffer 32 from which it can be directed to a desired output.

Referring to Figure 7 there is shown a more detailed diagram of the image processing system. Here analog video signals received by a daughter card 66 are digitized and sent to shift register 62 which is incorporated into the frame buffer 32 together with the VRAM chip 64. The frame buffer 32 is controlled by a video system controller chip 68 which refreshes the frame buffer 32 and arbitrates access to the frame buffer 32. The DSP 42 has its own discrete memory 43 consisting of 64 kilobytes of high speed static ram memory 41 and 32 Kilobytes of electrically erasable programmable only memory (EPROM) 39. Output from the DSP is through either a communication daughter card 74 or to a host interface 70 couplable to a host computer 72.

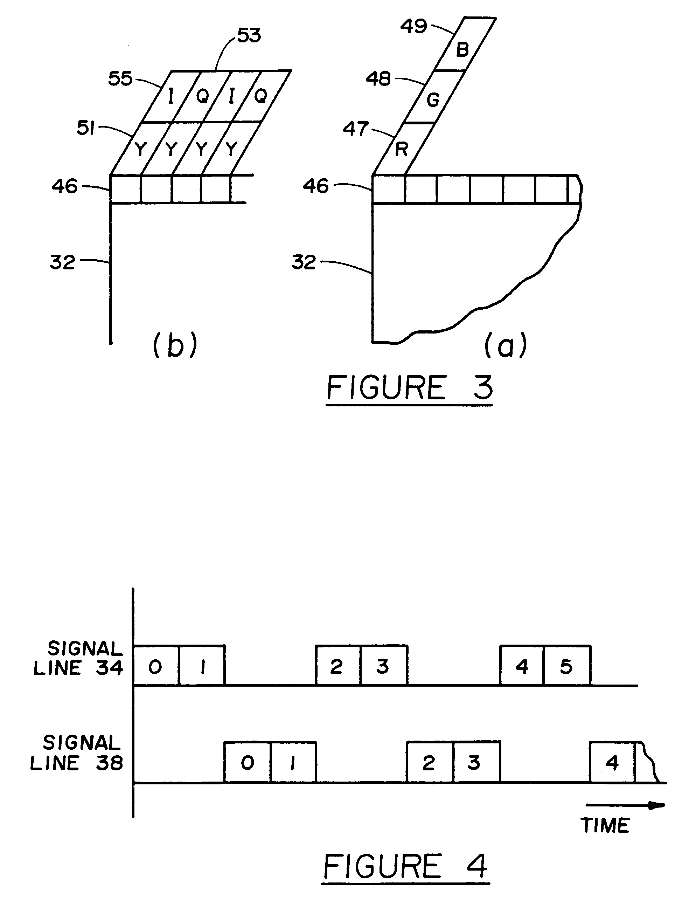

Each pixel 46 of frame buffer 32 is shown schematically in Figure 3(b) as consisting of three parameters such as red 47, green 48 and blue 49. The intensity of each colour component is described by an 8 bit number. Other means of describing the colour and intensity of a pixel may be used. The method employed in the present invention consists of choosing a parameter Y corresponding to intensity and two parameters I and Q which correspond to colour. It is possible with such a choice to reduce the number of bytes required in each pixel from three to two by alternating I and Q in adjacent pixels as shown in Figure 3(a) without detracting noticeably from the quality of the picture. Thus, each tile consists of an 8 pixel x 8 pixel block with each pixel having a number of bits to describe its colour and intensity.

Image data in the frame buffer 32 is stored in a YIQ format. With respect to figure 2, when a row of tiles is transferred from the frame buffer 32 to the memory of the tile buffer 37. However, the state machine 58 first sends all of the Y image components of all tiles in the tile buffer 37 through the DCT chip 36, followed by the I then Q components. Once the operation of the DCT chip 36 is complete, the DSP 42 is able to access the DCT coefficients in the tile buffer 37 for all three components Y, I, and Q.

To appreciate the timing of transferring tiles Figure 4 shows that the first two tiles are transferred sequentially to the DCT 36 and are returned to the tile buffer before the next two tiles are extracted from the frame buffer 32 and placed in the tile buffer 37. Thus, there is a delay of two tiles introduced by the return of processed tiles from the DCT 36.

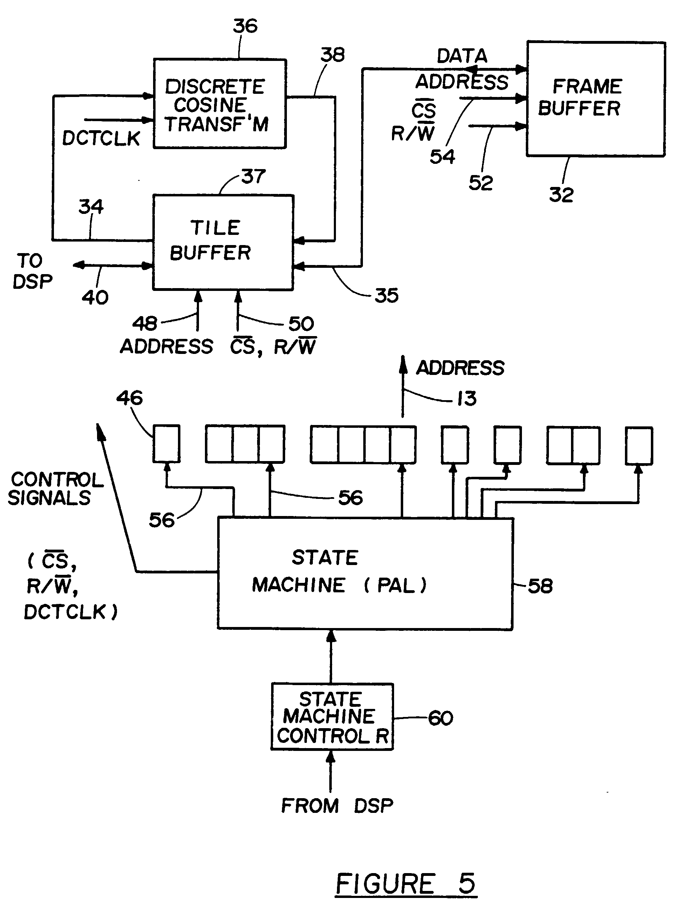

The operation of the state machine 58, implemented with programmable array logic the chips for which are commonly referred to as PAL's, is controlled by the digital signal processor 42. Upon informing the state machine 58 of the required operation, such as a frame buffer 32 to tile buffer 37 transfer or DCT 36 transformation, by depositing a specific control value in a state machine control register 60 (see Figure 5), the DSP 42 sends a signal to the state machine 58 informing it to "go". The state machine 58 performs the operation requested by the DSP 42 and, upon completion, sends an "I'm done" signal to the DSP 42. While the state machine 58 is performing an operation the DSP 42 is free to do other tasks.

When performing any transfer operation, as seen in Figure 5, the state machine 58 must generate address signals for the tile buffer 37 and frame buffer 32 and control signals for the tile buffer 37, frame buffer 32, and DCT chip 36. The address generated by the state machine 58 originates from a group of counters 46 divided into address fields. Each field of addresses may be independently incremented by the state machine 58. The concatenated address fields form the full address used by both the tile buffer 37 and the frame buffer 32 memories. Individual address fields may define the tile number "t", row number "r", and column number "c" transferred at any given time in a state machine operation. By examining a control register 60 of the state machine 58 and the current address of the address fields, the state machine 58 is able to decide the appropriate "next address" for the next data transfer and pulses the appropriate increment signal on selected ones of lines 56 to the counters 46 so that that address is generated. The control signals inform the tile buffer 37, frame buffer 32, and DCT chip 36 when to read and write data. They are generated by the state machine 58 by examining the state machine control register 60 and the current state of the state machine 58.

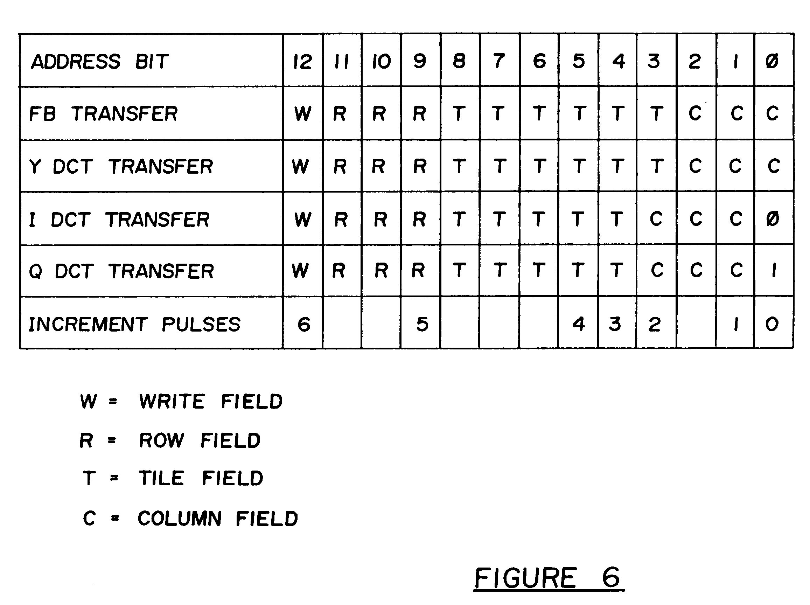

The state machine addresses, shown in detail in Figure 6, each consist of 13 bits divided up into four different fields. The fields are write "w", row number "r", tile number "t" and column number "c". Together w, r, t, and c produce an address which points to a single pixel or coefficient within the frame buffer 32 or tile buffer 37. The tile field "t" indicates the current tile which is involved in a state machine transfer. There are 64 Y tiles and 32 of each of the I and Q tiles contained within a row of tiles. Therefore, 6 bits are required to indicate a unique Y field of a tile and 5 bits to indicate a unique I or Q field. The row field "r" indicates the row, numbered from 0 to 7. The value in the single bit write field is used to determine whether a tile buffer "read" or tile buffer "write" will occur during transfers to and from the DCT 36. Because I image components are stored only in even pixels in the frame buffer and Q image components are stored only in odd pixels in the frame buffer, as shown in Figure 3(b), the arrangement for the I and Q tile and column fields differ from the Y component's tile and column field arrangement.

The state machine carries out the following five different transfer operations:
(1) Transfer of a row of tiles from the frame buffer 32 to the tile buffer 37.
(2) Transfer of a row of tiles from the tile buffer 37 to the frame buffer 32.
(3) Transfer the Y component of the tiles in the tile buffer through the DCT chip 36 and back into the tile buffer 37.
(4) Transfer of the I component of the tiles in the tile buffer 37 through the DCT chip 37 and back into the tile buffer 37.
(5) Transfer of the Q component of the tiles in the tile buffer 37 through the DCT chip 36 and back into the tile buffer 37.

The address generated by the state machine 58 flows to both the tile and frame buffers 37 and 32, respectively. As an example, when setup by the DSP 42 to perform a frame buffer 32 to tile buffer 37 transfer and told to "go", the state machine's address fields are initially all equal to zero. The address is pointing, therefore, to row 0 and column 0 of tile 0, which is the first pixel in both the frame and tile buffers 32 and 37, respectively. A read signal is sent to the frame buffer 32, a write signal is sent to the tile buffer 37 and the first word of image components is transferred directly from frame buffer 32 to the tile buffer 37.

Immediately following the aforementioned pixel transfer, the state machine 58 examines the current state of the address fields and the type of transfer requested. It uses this information to determine the proper "next address" required and strobes the appropriate increment pulses to generate that address. In this case, increment pulse 0 would be strobed resulting in the column field being increased to 1. The second pixel is then transferred directly from the frame buffer 32 to the tile buffer 37 by the state machine 58 by again strobing the appropriate read and write control signals.

The state machine 58 continually strobes the appropriate increment pulses to generate the required address and the read/write control signals to initiate the frame buffer 32 to tile buffer 37 transfer until all pixels in the selected row of tiles in the frame buffer 32 have been transferred to the tile buffer 37. The full address sent to both the frame buffer 32 and tile buffer 37 is simply incremented by one for each pixel transfer, in a frame buffer 32 to tile buffer 37 transfer, until the state machine 58 detects that the last transfer ( the 4095th pixel) has been accomplished. At this time, the state machine 58 sends an "I'm done" signal to the DSP 42 to indicate the completion of the requested operation.

When the state machine 58 is conditioned by the DSP 42 to transfer data to or from the DCT 36 and told to "go", for each DCT chip 36 clock cycle, the state machine 58 must send an expected pixel or coefficient of data to or cause the tile buffer 37 to receive it from the DCT chip 36. The DCT chip 36 requires input and output data to be handled in a strict order. For example, the DCT chip 36 requires data to be presented to it row by row within a give tile. The state machine is able to generate the proper address by examining the type of DCT operation in progress (Y, I, or Q) and the current state of the address field. The address initially points to row and column 0 of tile 0. As data is transferred from the tile buffer 37 to the DCT chip 36, the column address field is first incremented until it reaches a maximum, i.e. 7. For the next transfer the column address field is reset and the row field is incremented. Eventually, when both the column and row address field reach their maximum value, they are reset and the tile field is incremented. Using this technique to generate the address flowing to the tile buffer 37, the DCT chip 36, is able to receive tile input data in the appropriate order. Output data from the DCT chip 35, directed to the tile buffer 37, is stored back in the appropriate tile, column, and row address locations using the same address generation technique. The write field indicates whether a tile buffer to DCT chip or DCT chip 36 to tile buffer 37 data transfer is currently occurring. Once all tiles within the tile buffer 37 have been directed through the DCT chip 36, the state machine 58 sends an "I'm done" signal to the DSP.

It is possible to use adaptive Huffman Coding rather than Huffman Coding. However, in the latter case it would require transferring back transformed data after operation of the DCT into the frame buffer as adaptive Huffman Coding requires that the whole of the intermediate results be looked at.

Accordingly, while this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is therefore contemplated that the appended claims will cover any such modifications or embodiments as fall within the true scope of the invention.

## Claims

1. A method of processing digital image data such as obtained from a television screen for transmission along telephone lines in which image data is digitized, stored in a frame buffer, transferred to a transformer and transformed and then transferred to a digital signal processor and coded, characterized by:
(a) storing a frame of incoming digital image data in said frame buffer (32);
(b) transferring data from said frame buffer (32) to a tile buffer (37);
(c) generating a clock signal;
(d) generating sets of address and control signals in a state machine (58);
(e) applying the clock signal to a digital transformer (36) and applying associated sets of address and control signals to said tile buffer (37) to directly transfer data in the tile buffer to the digital transformer (36);
(f) transforming the transferred data;
(g) returning the data transformed to said tile buffer (37) and overwriting the corresponding untransformed data in said tile buffer (37) with the transformed data;
(h) repeating step (c) to (g) until all data in said tile buffer has been transformed and returned;
(i) transferring the transformed data from said tile buffer to a digital signal processor (42) and coding the transformed data so as to compress it; and
(j) simultaneously, while transferring the transformed data to said digital signal processor (42) and coding said transformed data wherein after coding coded data is not returned for storage to said frame buffer, transferring additional data from said frame buffer (32) to said tile buffer (37) in accordance with step (b);
(k) repeating steps (h) to (j) until all data in said frame buffer (32) is compressed.

2. A method according to claim 1, wherein said data from said frame buffer is transferred directly to said tile buffer (37).

3. A method according to claim 1 or 2, wherein said clock signal has a frequency greater than approximately one megahertz.

4. A method according to claim 1 or 2, wherein said digital transformer (36) applies a discrete cosine transform.

5. A method according to claim 2, wherein said coding is Huffman coding.

6. A method according to claim 1 or 2, wherein data stored in said frame buffer (32) is in the form of 8 bits of Y intensity data, 8 bits of I colour data and 8 bits of Q colour data with each pixel defined by Y and either I or Q with I and Q alternating along each row of pixels.

7. A method according to claim 1, wherein the data transferred from said tile buffer (37) to said transformer (36) is contained in a pair of tiles with each tile containing Y and I or Y and Q data, wherein each tile includes a block having 8 pixels x 8 pixels with the pixels in each row being defined by alternating sets of Y and I and Y and Q data.

8. A method according to claim 7, wherein data in said tile buffer (37) is transferred by transferring two tiles at a time, first y data in one tile and then Y data in the next tile, then I data in one tile and then I data in a next tile and finally Q data in one tile and then Q data in the next tile until all tiles in said tile buffer (37) have been transferred from and returned to said tile buffer (37).

9. A method of processing digital image data such as obtained from a television screen for transmission along telephone lines such that the transmitted data can be restored to produce images in colour and in which image data is digitized, stored in a frame buffer, transferred to a transformer and transformed and then transferred to a digital signal processor and coded, characterized by a transforming and coding step which includes:
(a) storing tiles in a frame buffer (32) wherein each tile is in the form of a matrix of 8 columns of pixels and 8 rows of pixels, with each pixel having bits to define its colour and intensity;
(b) transferring tiles of digital data directly from said frame buffer (32) to a tile buffer (37);
(c) digitally transforming said tiles of data and overwriting the untransformed tiles of data in said tile buffer (37) with the corresponding transformed tiles;
(d) transferring transformed data from said tile buffer (37) to a digital signal processor (42) for coding thereof and not returning the transformed data after coding to said frame buffer (32) or to said tile buffer (37);
(e) simultaneously, while transferring transformed data from said tile buffer (37) to said digital signal processor (42), transferring a next tile of data from said frame buffer (32) to said tile buffer (37) for transforming;
(f) repeating steps (b) to (e) until all tiles of data in said frame buffer (32) have been transformed and coded;
and a reverse coding and inverse transforming step which includes:
(g) performing reverse coding of said coded data in a digital signal processor (42) and transferring the resulting decoded data to a tile buffer (37);
(h) transferring decoded but transformed data in said tile buffer (37) to a transformer (36) and inverse transforming the decoded and transformed data to produce decoded and inverse transformed data and overwriting the corresponding decoded transformed data in said tile buffer (37) with the decoded and inverse transformed data;
(i) transferring the decoded and inverse transformed data from said tile buffer (37) to said frame buffer (32).

10. A method according to claim 9, wherein said state machine (58) generates addresses by initializing counters corresponding to each of a plurality of address fields and concatenating the fields to provide an address.

11. A method according to claim 9, wherein said data in said frame buffer (32) is stored in the form of tiles, with each tile in the form of a matrix with 8 columns and 8 rows of pixels.

12. A method according to claim 9 wherein said data is transferred to said tile buffer (37) by rows, one row of tiles at a time, wherein adjacent tiles in each row of tiles have a contiguous address space.

13. A method according to claim 9, wherein said coding performed by said digital signal processor (42) is Huffman coding.

14. A method according to claims 9 or 13, wherein said reverse coding and transforming step includes performing reverse Huffman Coding on incoming transformed and coded data and storing the reverse coded signals in said tile buffer (37), performing an inverse discrete cosine transform on said compressed data, and then transferring said inverse transformed data to said frame buffer (32) for temporary storage.

15. Apparatus for processing digital image data such as obtained from a television or video screen, characterized by :
(a) a frame buffer (32) for storing pixels of image data in a matrix of rows and columns in address space;
(b) a tile buffer (37) coupled to said frame buffer (32) so that tiles of data stored in said frame buffer (32) are transferable to said tile buffer (37) and tiles stored in said tile buffer (37) are transferable to said frame buffer (32), wherein a tile is formed by a sub-matrix of n x n pixels where "n" is a integer, one multiple of which equals the number of rows and another multiple of which equals the number of columns in said frame buffer (32);
(c) a digital signal processor (42) connected to said tile buffer operative to code data received from said tile buffer and reverse code compressed data received from an external transmitting source and direct the reverse coded data to said tile buffer;
(d) a transformer (36) coupled to said tile buffer (37) operative to transform data from said tile buffer (37) that has been received from said frame buffer (32) and to inversely transform data from said tile buffer (37) that has been received from said signal processor (42); and
(e) a state machine (58) coupled to said frame buffer (32), said tile buffer (37), said transformer (36) and to said digital signal processor (42) operative to generate addresses and control the transfer of tiles between the frame buffer (32) and the tile buffer (37), between the tile buffer (37) and the digital signal processor (42), and between the tile buffer and the transformer (36),
wherein as tiles of data are transferred from said tile buffer to said digital signal processor, rows of tiles are simultaneously transferred from said frame buffer to said tile buffer.

16. Apparatus according to claim 15, wherein said frame buffer is a video dynamic random access memory unit and wherein tiles are transferred to said tile buffer from said frame buffer a row of tiles at a time and pairs of tiles adjacent in address space from said tile buffer are sent to said transformer and then returned to said tile buffer after transformation.

17. Apparatus according to claim 15, wherein said processor performs Huffman coding and said transformer performs discrete cosine transforming.

18. Apparatus according to claim 15, wherein said state machine (58) is operative to provide address and control signals to each of the latter so as to cause data in said frame buffer (32) to be transferred directly row by row to or from said tile buffer (37), and to cause tile transfers directly between said tile buffer (37) and said digital transformer (36).

19. Apparatus according to claim 15, wherein each pixel is characterized by a word defining its colour and one defining its intensity.

## Patentansprüche

1. Verfahren zur Verarbeitung digitaler Bilddaten, wie sie von einem Fernsehbildschirm erhalten werden, zur Übermittlung in Telefonleitungen, wobei Bilddaten digitalisiert, in einem Vollbild-Pufferspeicher gespeichert, in einen Transformer übertragen und transformiert werden und dann in einen digitalen Signalprozessor übertragen und kodiert werden, **gekennzeichnet durch:**
(a) Speichern eines Vollbildes von eintrefenden digitalen Bilddaten im Vollbild-Pufferspeicher (32);
(b) Übertragen von Daten vom Vollbild-Pufferspeicher (32) in einen Bildsegment-Pufferspeicher (37);
(c) Erzeugen eines Taktsignals;
(d) Erzeugen von Adress- und Kontrollsignalsätzen in einer Zustandsmaschine (58);
(e) Anlegen des Taktsignals an einen Digitaltransformer (36) und Anwenden von verknüpften Adress- und Kontrollsignalsätzen auf den Bildsegment-Pufferspeicher (37), um direkt Daten im Bildsegment-Pufferspeicher in den Digitaltransformer (36) zu übertragen;
(f) Transformieren der übertragenen Daten;
(g) Rückgabe der transformierten Daten in den Bildsegment-Pufferspeicher (37) und Überschreiben der entsprechenden nichttransformierten Daten im Bildsegment-Pufferspeicher (37) mit den transformierten Daten;
(h) Wiederholen der Schritte (c) bis (g), bis ale Daten im Bildsegment-Pufferspeicher transformiert und zurückgegeben sind;
(i) Übertragen der transformierten Daten vom Bildsegment-Pufferspeicher in einen digitalen Signalprozessor (42) und Kodieren der transformierten Daten, um sie zu komprimieren; und
(j) gleichzeitiges, während des Übertragens der transformierten Daten in den digitalen Signalprozessor (42) und des Kodierens der transformierten Daten ausgeführtes Übertragen von zusätzlichen Daten vom Vollbild-Pufferspeicher (32) in den Bildsegment-Pufferspeicher (37) gemäss Schritt (b), wobei die kodierten Daten nach dem Kodieren nicht zwecks Speicherung in den Vollbild-Pufferspeicher zurückgegeben werden;
(k) Wiederholen der Schritte (h) bis (j), bis alle Daten im Vollbild-Pufferspeicher (32) komprimiert sind.

2. Verfahren nach Anspruch 1, wobei die Daten direkt vom Vollbild-Pufferspeicher in den Bildsegment-Pufferspeicher (37) übertragen werden.

3. Verfahren nach Anspruch 1 oder 2, wobei die Frequenz des Taktsignals grösser als ungefähr ein Megahertz ist.

4. Verfahren nach Anspruch 1 oder 2, wobei der Digitaltransformer (36) eine diskrete Kosinustransformation ausführt.

5. Verfahren nach Anspruch 2, wobei die Kodierung eine Huffman-Kodierung ist.

6. Verfahren nach Anspruch 1 oder 2, wobei im Vollbild-Pufferspeicher (32) gespeicherte Daten die Form von 8-Bit-Daten der Intensität Y, 8-Bit-Daten der Farbe I und 8-Bit-Daten der Farbe Q haben, jedes Pixel durch Y und entweder I oder Q definiert ist und I und Q entlang jeder Pixelreihe alternieren.

7. Verfahren nach Anspruch 1, wobei die vom Bildsegment-Pufferspeicher (37) in den Digitaltransformer (36) übertragenen Daten in einem Bildsegmentpaar enthalten sind, jedes Bildsegment Y- und I-Daten oder Y- und Q-Daten enthält und jedes Bildsegment einen Block von 8 × 8 Pixeln beinhaltet, in welchem die Pixel in jeder Reihe durch alternierende Sätze von Y- und I-Daten und von Y- und Q-Daten definiert sind.

8. Verfahren nach Anspruch 7, wobei Daten im Bildsegment-Pufferspeicher (37) übertragen werden, indem zwei Bildsegmente auf einmal übertragen werden, zuerst Y-Daten in einem Bildsegment und dann Y-Daten im nächsten Bildsegment, danach I-Daten in einem Bildsegment und dann I-Daten in einem nächsten Bildsegment und schliesslich Q-Daten in einem Bildsegment und dann Q-Daten im nächsten Bildsegment, bis alle Bildsegmente im Bildsegment-Pufferspeicher (37) vom Bildsegment-Pufferspeicher (37) übertragen und dahin zurückgegeben sind.

9. Verfahren zur Verarbeitung digitaler Bilddaten, wie sie von einem Fernsehbildschirm erhalten werden, zur Übermittlung in Telefonleitungen, so dass die übertragenen Daten rekonstruiert werden können, um Farbbilder zu erzeugen, wobei Bilddaten digitalisiert, in einem Vollbild-Pufferspeicher gespeichert, in einen Transformer übertragen und transformiert werden und danach in einen digitalen Signalprozessor übertragen und kodiert werden, **gekennzeichnet**
durch einen Transformations- und Kodierungsschritt beinhaltend:
(a) Speichern von Bildsegmenten in einem Vollbild-Pufferspeicher (32), wobei jedes Bildsegment die Form einer Matrix mit 8 Pixelkolonnen und 8 Pixelzeilen hat und jedes Pixel Bits zur Definition seiner Farbe und Intensität aufweist;
(b) direktes Übertragen von Segmenten digitaler Daten vom Vollbild-Pufferspeicher (32) in einen Bildsegment-Pufferspeicher (37);
(c) digitales Transformieren der Datensegmente und Überschreiben der nichttransformierten Datensegmente im Bildsegment-Pufferspeicher (37) mit den entsprechenden transformierten Bildsegmenten;
(d) Übertragen von transformierten Daten vom Bildsegment-Pufferspeicher (37) in einen digitalen Signalprozessor (42) zum Kodieren der transformierten Daten und keine Rückgabe der transformierten Daten in den Vollbild-Pufferspeicher (32) oder in den Bildsegment-Pufferspeicher (37) nach dem Kodieren;
(e) gleichzeitiges, während des Übertragens von transformierten Daten vom Bildsegment-Pufferspeicher (37) in den digitalen Signalprozessor (42) ausgeführtes Übertragen eines nächsten Datensegmentes vom Vollbild-Pufferspeicher (32) in den Bildsegment-Pufferspeicher (37) zwecks Transformierens;
(f) Wiederholung der Schritte (b) bis (e), bis alle Datensegmente im Vollbild-Pufferspeicher (32) transformiert und kodiert sind;
sowie durch einen Rückkodierungs- und inversen Transformationsschritt beinhaltend:
(g) Ausführen einer Rückkodierung der kodierten Daten in einem digitalen Signalprozessor (42) und Übertragen der resultierenden dekodierten Daten in einen Bildsegment-Pufferspeicher (37);
(h) Übertragung dekodierter, aber transformierter Daten im Bildsegment-Pufferspeicher (37) in einen Transformer (36), inverse Transformation der dekodierten und transformierten Daten zur Erzeugung von dekodierten und invers transformierten Daten und Überschreiben der entsprechenden dekodierten transformierten Daten im Bildsegment-Puferspeicher (37) mit den dekodierten und invers transformierten Daten;
(i) Übertragen der dekodierten und invers transformierten Daten vom Bildsegment-Pufferspeicher (37) in den Vollbild-Pufferspeicher (32).

10. Verfahren nach Anspruch 9, wobei die Zustandsmaschine (58) Adressen durch Initialisieren von Zählern erzeugt, welche je einem Adressfeld aus einer Mehrzahl von Adressfeldern entsprechen und die Felder verknüpfen, um eine Adresse zu schaffen.

11. Verfahren nach Anspruch 9, wobei die Daten im Vollbild-Pufferspeicher (32) in Form von Bildsegmenten gespeichert werden und jedes Bildsegment die Form einer Matrix mit 8 Pixelkolonnen und 8 Pixelzeilen hat.

12. Verfahren nach Anspruch 9, wobei die Daten zeilenweise, eine Bildsegmentzeile auf einmal, in den Bildsegment-Pufferspeicher (37) übertragen werden und benachbarte Bildsegmente in jeder Bildsegmentzeile einen angrenzenden Adressraum haben.

13. Verfahren nach Anspruch 9, wobei die durch den digitalen Signalprozessor (42) ausgeführte Kodierung eine Huffman-Kodierung ist.

14. Verfahren nach Anspruch 9 oder 13, wobei der Rückkodierungs- und Transformationsschritt das Ausführen einer Huffman-Rückkodierung auf eintreffenden transformierten und kodierten Daten und das Speichern der rückkodierten Signale im Bildsegment-Pufferspeicher (37), das Ausführen einer inversen diskreten Kosinustransformation auf den komprimierten Daten und schliesslich das Übertragen der invers transformierten Daten in den Vollbild-Pufferspeicher (32) zwecks vorübergehender Speicherung beinhaltet.

15. Vorrichtung zur Verarbeitung digitaler Bilddaten, wie sie von einem Fernseh- oder Videobildschirm erhalten werden, **gekennzeichnet durch:**
(a) einen Vollbild-Pufferspeicher (32) zum Speichern von Bilddatenpixeln in einer Matrix aus Zeilen und Kolonnen im Adressraum;
(b) einen Bildsegment-Pufferspeicher (37), welcher derart an den Vollbild-Pufferspeicher (32) gekoppelt ist, dass im Vollbild-Pufferspeicher (32) gespeicherte Datensegmente in den Bildsegment-Pufferspeicher (37) übertragbar sind und im Bildsegment-Pufferspeicher (37) gespeicherte Bildsegmente in den Vollbild-Pufferspeicher (32) übertragbar sind, wobei ein Bildsegment durch eine Untermatrix von n × n Pixeln gebildet wird, worin "n" eine ganze Zahl ist, deren ein Vielfaches gleich der Anzahl Zeilen und deren anderes Vielfaches gleich der Anzahl Kolonnen des Vollbild-Pufferspeichers (32) ist;
(c) einen mit dem Bildsegment-Pufferspeicher verbundenen digitalen Signalprozessor (42) zum Kodieren von vom Bildsegment-Pufferspeicher empfangenen Daten, zum Rückkodieren von komprimierten, von einer externen Sendequelle empfangenen Daten und zum Leiten der rückkodierten Daten zum Bildsegment-Pufferspeicher;
(d) einen an den Bildsegment-Pufferspeicher (37) gekoppleten Transformer (36) zum Transformieren von Daten aus dem Bildsegment-Pufferspeicher (37), welche vom Vollbild-Pufferspeicher (32) empfangen worden sind, und zum inversen Transformieren von Daten aus dem Bildsegment-Pufferspeicher (37), welche vom Signalprozessor (42) empfangen worden sind; und
(e) eine an den Vollbild-Pufferspeicher (32), den Bildsegment-Pufferspeicher (37), den Transformer (36) und den digitalen Signalprozessor (42) gekoppelte Zustandsmaschine (58) zum Erzeugen von Adressen und zum Kontrollieren der Bildsegmentübertragung zwischen dem Vollbild-Pufferspeicher (32) und dem Bildsegment-Pufferspeicher (37), zwischen dem Bildsegment-Pufferspeicher (37) und dem digitalen Signalprozessor (42) und zwischen dem Bildsegment-Pufferspeicher und dem Transformer (36),
wobei gleichzeitig mit der Übertragung von Datensegmenten vom Bildsegment-Pufferspeicher in den digitalen Signalprozessor Bildsegmentzeilen vom Vollbild-Pufferspeicher in den Bildsegment-Pufferspeicher übertragen werden.

16. Vorrichtung nach Anspruch 15, wobei der Vollbild-Pufferspeicher eine dynamische Video-Direktzugriffsspeichereinheit ist, Bildsegmente vom Vollbild-Pufferspeicher in den Bildsegment-Pufferspeicher übertragen werden, indem eine Bildsegmentzeile auf einmal übertragen wird, und im Adressraum benachbarte Bildsegmentpaare vom Bildsegment-Pufferspeicher in den Transformer gesandt und dann nach einer Transformation in den Bildsegment-Pufferspeicher zurückgegeben werden.

17. Vorrichtung nach Anspruch 15, wobei der Prozessor eine Huffman-Kodierung ausführt und der Transformer eine diskrete Kosinustransformation ausführt.

18. Vorrichtung nach Anspruch 15, wobei die Zustandsmaschine (58) dazu dient, die entsprechenden Mittel mit Adress- und Kontrollsignalen zu versorgen, um zu bewirken, dass Daten im Vollbild-Pufferspeicher (32) direkt Zeile um Zeile zum oder vom Bildsegment-Pufferspeicher (37) übertragen werden und dass Bildsegmente direkt zwischen dem Bildsegment-Pufferspeicher (37) und dem Digitaltransformer (36) übertragen werden.

19. Vorrichtung nach Anspruch 15, wobei jedes Pixel durch ein Wort, welches seine Farbe definiert, und ein Wort, welches seine Intensität definiert, gekennzeichnet ist.

## Revendications

1. Méthode de traitement de données d'image numériques, telles que celles obtenues à partir d'un écran de télévision pour transmission par lignes téléphoniques dans laquelle les données d'image sont numérisées, mémorisées dans un tampon d'image, transférées vers un transformateur et transformées puis transférées vers un processeur de signaux numériques et codées, caractérisée par :
(a) la mémorisation d'une image des données d'image numériques en réception dans ledit tampon d'image (32) ;
(b) le transfert des données depuis ledit tampon d'image (32) vers un tampon à effet de carreaux (37) ;
(c) la génération d'un signal d'horloge ;
(d) la génération d'ensembles d'adressage et de signaux de commande dans une machine d'état (58) ;
(e) l'application du signal d'horloge à un transformateur numérique (36) et l'application de jeux associés d'adressage et de signaux de commande audit tampon à effet de carreaux (37) afin de transférer directement des données dans le tampon à effet de carreaux vers le transformateur numérique (36) ;
(f) la transformation des données transférées ;
(g) le retour des données transformées vers ledit tampon à effet de carreaux (37) et l'écrasement par réécriture des données correspondantes non transformées par les données transformées dans ledit tampon à effet de carreaux (37) ; (h) la répétition des étapes (c) à (g) jusqu'à ce que toutes les données dans ledit tampon à effet de carreaux aient été transformées et retournées ;
(i) le transfert des données transformées depuis ledit tampon à effet de carreaux vers un processeur de signaux numériques (42) et le codage des données transformées de manière à les compacter ; et
(j) simultanément, pendant le transfert des données transformées audit processeur de signaux numériques (42) et le codage desdites données transformées dans lequel, après le codage, les données codées ne sont pas retournées pour mémorisation audit tampon d'image, le transfert de données supplémentaires dudit tampon d'image (32) vers ledit tampon à effet de carreaux (37) conformément à l'étape (b) ;
(k) la répétition des étapes (h) à (j) jusqu'à ce que toutes les données soient compactées dans ledit tampon d'image (32).

2. Méthode selon la revendication 1, dans laquelle lesdites données dudit tampon d'image sont transférées directement audit tampon à effet de carreaux (37).

3. Méthode selon la revendication 1 ou 2, dans laquelle la fréquence du signal d'horloge est approximativement supérieure à un mégahertz.

4. Méthode selon la revendication 1 ou 2, dans laquelle ledit transformateur numérique (36) applique une transformation cosinusoïdale discrète.

5. Méthode selon la revendication 2, dans laquelle ledit codage est un codage Huffman.

6. Méthode selon la revendication 1 ou 2, dans laquelle les données mémorisées dans ledit tampon d'image (32) se présentent sous la forme de données de 8 bits d'intensité Y, de données de 8 bits de couleur I et de données de 8 bits de couleur Q, chaque pixel étant défini par Y et soit I soit Q, I et Q alternant le long de chaque ligne de pixels.

7. Méthode selon la revendication 1, dans laquelle les données transférées depuis ledit tampon à effet de carreaux (37) audit transformateur (36) sont contenues dans une paire de carreaux dont chaque carreau contient des données Y et I ou Y et Q, dans laquelle chaque carreau comprend un bloc de 8 pixels x 8 pixels, les pixels de chaque ligne étant définis par des jeux de données Y et I et Y et Q en alternance.

8. Méthode selon la revendication 7, dans laquelle les données dans ledit tampon à effet de carreaux (37) sont transférées en transférant deux carreaux à la fois, d'abord des données Y dans un carreau, puis des données Y dans le carreau suivant, puis des données I dans un carreau, puis des données I dans un carreau suivant et enfin des données Q dans un carreau puis des données Q dans le carreau suivant, jusqu'à ce que tous les carreaux dans ledit tampon à effet de carreaux (37) aient été transférés depuis ledit tampon à effet de carreaux (37) et qu'ils y soient retournés.

9. Méthode de traitement de données d'image numériques, telles que celles obtenues à partir d'un écran de télévision pour transmission par lignes téléphoniques de manière que les données transmises puissent être restaurées afin de produire des images en couleur et dans laquelle les données d'image sont numérisées, mémorisées dans un tampon d'image, transférées vers un transformateur et transformées, puis transférées vers un processeur de signaux numériques et codées, caractérisée par une étape de transformation et de codage qui comprend :
(a) la mémorisation de carreaux dans un tampon d'image (32) dans lequel chaque carreau se présente sous la forme d'une matrice à 8 colonnes de pixels et à 8 lignes de pixels, chaque pixel ayant des bits définissant sa couleur et son intensité ;
(b) le transfert direct des carreaux de données numériques depuis ledit tampon d'image (32) vers le tampon à effet de carreaux (37) ;
(c) la transformation numérique desdits carreaux de données et la réécriture des carreaux de données non transformés par les carreaux transformés correspondants dans ledit tampon à effet de carreaux (37) ;
(d) le transfert des données transformées dudit tampon à effet de carreaux (37) vers un processeur de signaux numériques (42) pour le codage de celui-ci et le non retour des données transformées après le codage audit tampon d'image (32) ou audit tampon à effet de carreaux (37) ;
(e) simultanément, pendant le transfert des données transformées dudit tampon à effet de carreaux (42), le transfert d'un nouveau carreau de données depuis ledit tampon d'image (32) vers ledit tampon à effet de carreaux (37) pour transformation ;
(f) la répétition des étapes (b) à (e) jusqu'à ce que tous les carreaux de données dans ledit tampon d'image (32) soient transformés et codés ;
ainsi qu'une étape de codage inverse et de transformation inverse qui inclut :
(g) la réalisation du codage inverse desdites données codées dans un processeur de signaux numériques (42) et le transfert des données décodées en résultant vers un tampon à effet de carreaux (37) ;
(h) le transfert des données décodées mais transformées dans ledit tampon à effet de carreaux (37) vers un transformateur (36) et la transformation en inverse des données décodées et transformées afin de produire des données décodées et transformées en inverse et la réécriture des données transformées décodées correspondantes par les données décodées et transformées en inverse dans ledit tampon à effet de carreaux (37) ;
(i) le transfert des données décodées et transformées en inverse depuis ledit tampon à effet de carreaux (37) audit tampon d'image (32).

10. Méthode selon la revendication 9, dans laquelle ladite machine d'état (58) génère un adressage par l'initialisation de compteurs correspondant à chacun des champs d'une pluralité de champs d'adressage et enchaînant les champs afin de fournir une adresse.

11. Méthode selon la revendication 9, dans laquelle lesdites données dans ledit tampon d'image (32) sont mémorisées sous la forme de carreaux, chaque carreau étant sous la forme d'une matrice ayant 8 colonnes et 8 lignes de pixels.

12. Méthode selon la revendication 9, dans laquelle lesdites données sont transférées dudit tampon à effet de carreaux (37) par lignes, une ligne de carreaux à la fois, dans laquelle des carreaux adjacents de chaque ligne de carreaux ont un espace d'adressage contigu.

13. Méthode selon la revendication 9, dans laquelle ledit codage réalisé par ledit processeur de signaux numériques (42) est un codage Huffman.

14. Méthode selon la revendication 9 ou 13, dans laquelle ladite étape de codage et de transformation en inverse comprend la réalisation du codage Huffman en inverse sur les données en réception transformées et codées et la mémorisation des signaux codés en inverse dans ledit tampon à effet de carreaux (37), la réalisation d'une transformation cosinusoïdale discrète en inverse sur lesdites données compactées, et puis le transfert desdites données transformées en inverse audit tampon d'image (32) pour mémorisation temporaire.

15. Dispositif pour le traitement de données d'image numériques, telles que celles obtenues depuis un écran vidéo ou de télévision, caractérisé par :
(a) un tampon d'image (32) pour la mémorisation des pixels des données d'image dans une matrice de lignes et de colonnes dans un espace d'adressage ;
(b) un tampon à effet de carreaux (37) relié audit tampon d'image (32) de manière que les carreaux de données mémorisés dans ledit tampon d'image (32) soient transférables audit tampon à effet de carreaux (37) et que les carreaux mémorisés dans ledit tampon à effet de carreaux (37) soient transférables audit tampon d'image (32), dans lequel un carreau est formé d'une sous-matrice de n x n pixels dans laquelle " n " est un nombre entier, un multiple duquel est égal au nombre de lignes et un autre multiple duquel est égal au nombre de colonnes dans ledit tampon d'image (32) ;
(c) un processeur de signaux numériques (42) connecté audit tampon à effet de carreaux afin de coder les données reçues dudit tampon à effet de carreaux et d'inverser le code des données compactées reçues depuis une source de transmission externe et de diriger les données codées en inverse vers ledit tampon à effet de carreaux ;
(d) un transformateur (36) relié audit tampon à effet de carreaux (37) fonctionnant pour transformer les données dudit tampon à effet de carreaux (37) qui ont été reçues depuis ledit tampon d'image (32) et pour transformer des données en inverse dudit tampon à effet de carreaux (37) qui ont été reçues dudit processeur de signaux (42) ; et
(e) une machine d'état (58) reliée audit tampon d'image (32), audit tampon à effet de carreaux (37), audit transformateur (36) et audit processeur de signaux numériques (42) fonctionnant afin de générer un adressage et de contrôler le transfert des carreaux entre le tampon d'image (32) et le tampon à effet de carreaux (37), entre le tampon à effet de carreaux (37) et le processeur de signaux numériques (42), et entre le tampon à effet de carreaux et le transformateur (36),
dans lequel pendant que des carreaux de données sont transférés depuis ledit tampon à effet de carreaux audit processeur de signaux numériques, des lignes de carreaux sont simultanément transférées dudit tampon d'image audit tampon à effet de carreaux.

16. Dispositif selon la revendication 15, dans lequel ledit tampon d'image est une unité de travail vidéo à mémoire vive, dans lequel des carreaux sont transférés audit tampon à effet de carreaux depuis ledit tampon d'image, une ligne de carreaux à la fois et dans lequel des paires de carreaux adjacentes dans l'espace d'adressage dudit tampon à effet de carreaux sont envoyées audit transformateur et ensuite retournées audit tampon à effet de carreaux après transformation.

17. Dispositif selon la revendication 15, dans lequel ledit processeur réalise un codage Huffman et ledit transformateur réalise une transformation cosinusoïdale discrète.

18. Dispositif selon la revendication 15, dans lequel ladite machine d'état (58) fonctionne afin de fournir un adressage et des signaux de commande à chacun des dispositifs précédents de façon à provoquer le transfert direct des données dudit tampon d'image (32) ligne par ligne depuis le tampon à effet de carreaux (37) ou vers celui-ci, et de provoquer les transferts de carreaux directement entre ledit tampon à effet de carreaux (37) et ledit transformateur numérique (36).

19. Dispositif selon la revendication 15, dans lequel chaque pixel est caractérisé par un mot définissant sa couleur et par un mot définissant son intensité.
